# EUROPÄISCHE PATENTANMELDUNG

(11) **EP 4 275 477 A1**
(43) Veröffentlichungstag der Anmeldung: **15.11.2023**
(21) Anmeldenummer: 23171671.3
(22) Anmeldetag: 04.05.2023
(51) Int. Cl.: A01D 75/20, A01D 89/00

(54) **VORSATZGERÄT EINES LANDWIRTSCHAFTLICHEN ERNTEFAHRZEUGS**

(30) Priorität: 10.05.2022 DE 102022111591
(71) Anmelder: CLAAS Saulgau GmbH, 88348 Bad Saulgau (DE)
(72) Erfinder: Haga, Björn, 88527 Unlingen (DE); König, Christian, 88094 Oberteuringen (DE); Knörle, Josef, 88213 Ravensburg-Schmalegg (DE)

(57) **Zusammenfassung**

Vorsatzgerät (10) eines landwirtschaftlichen Erntefahrzeugs, mit einem Rahmen (11), mit einer Erntegutaufnahmeeinrichtung (12), die eingerichtet ist, Erntegut von einem Untergrund aufzunehmen, mit einer Erntegutfördereinrichtung (13), die eingerichtet ist, aufgenommenes Erntegut in Richtung auf ein Einzugswerk des Erntefahrzeugs zu fördern, mit einem Erntegutniederhalter (14), der an einer gegenüber dem Rahmen (11) verlagerbaren Aufnahme (17) gelagert ist, und mit einer Schutzvorrichtung (18), die mindestens zwei Abschnitte (19, 20) aufweist und die sich oberhalb der Erntegutaufnahmeeinrichtung (12) und oberhalb der Erntegutfördereinrichtung (13) erstreckt, wobei ein erster Abschnitt (19) der Schutzvorrichtung (18) und ein zweiter Abschnitt (20) der Schutzvorrichtung (18) gelenkig miteinander verbunden sind, derart, dass bei einer Verlagerung des Erntegutniederhalters (14) und der Aufnahme (17) desselben relativ zum Rahmen (11) der erste Abschnitt (19) der Schutzvorrichtung (18) und der zweite Abschnitt (20) der Schutzvorrichtung (19) relativ zueinander verlagerbar sind.

## Beschreibung

Die Erfindung betrifft ein Vorsatzgerät eines landwirtschaftlichen Erntefahrzeugs.

Aus DE 10 2012 011 591 A1 ist eine Aufnahmevorrichtung einer landwirtschaftlichen Erntemaschine bekannt, die als sogenannte Pick-up ausgeführt ist. Eine solche Aufnahmevorrichtung verfügt über eine Erntegutaufnahmeeinrichtung, die eingerichtet ist, um von einem Boden bzw. Untergrund Erntegut aufzunehmen, welches auf dem Boden in Form eines geschnittenen Schwads liegt. Die Erntegutaufnahmeeinrichtung wird auch als Aufsammeltrommel bezeichnet. Ferner verfügt die Aufnahmevorrichtung über eine Erntegutfördereinrichtung, die eingerichtet ist, um von der Erntegutaufnahmeeinrichtung aufgenommenes Erntegut in Richtung auf ein Einzugswerk der Erntemaschine zu fördern. Bei der Erntegutfördereinrichtung handelt es sich vorzugsweise um eine Schnecke. Ferner verfügt eine solche Aufnahmevorrichtung über einen Erntegutniederhalter, der oben auf dem Erntegut, und zwar auf dem Schwad aus geschnittenem Erntegut, aufliegt. Eine solche als Pick-up ausgebildete Aufnahmevorrichtung kann als Vorsatzgerät eines landwirtschaftlichen Erntefahrzeugs ausgeführt sein.

Bei aus der Praxis bekannten Vorsatzgeräten, die als Aufnahmevorrichtung bzw. Pick-up ausgeführt sind, ist der Bereich oberhalb der Erntegutaufnahmeeinrichtung sowie der Transporteinrichtung nach oben hin offen. Aufgewirbeltes Erntegut kann so das Sichtfeld eines Fahrers des landwirtschaftlichen Erntefahrzeugs beeinträchtigen. Ferner kann aufgewirbeltes Erntegut in den Bereich von Lüftereinlässen und Kühleinlässen des Erntefahrzeugs gelangen und dieselben zusetzen.

DE 199 11 828 B4 offenbart eine Schmutzfangeinrichtung für ein landwirtschaftliches Erntefahrzeug. Das landwirtschaftliche Erntefahrzeug verfügt über ein Vorsatzgerät, welches entweder als Pick-up oder als Maispflücker ausgebildet ist. Am Vorsatzgerät ist die Schmutzfangeinrichtung verbaut.

Die Schmutzfangeinrichtung der DE 199 11 828 B4 verfügt über einen Rahmen, in dem ein Netz oder Gitter befestigt ist, wobei der Rahmen an einer Seite gelenkig an einem Rahmen bzw. Gestell des Vorsatzgeräts befestigt ist. Die aus diesem Stand der Technik bekannte Schmutzfangeinrichtung hat nur eine stark eingeschränkte Wirkung. Es ist nicht möglich, das Sichtfeld eines Fahrers des Erntefahrzeugs deutlich zu verbessern. Auch ist es nicht möglich, zu verhindern, dass aufgewirbeltes Erntegut in den Bereich von Kühleinlässen und Lufteinlässen des Erntefahrzeugs gelangt.

Es besteht Bedarf an einem Vorsatzgerät, bei welchem verhindert werden kann, dass aufgewirbeltes Erntegut in den Bereich von Kühl- und Lüftereinlässen des landwirtschaftlichen Erntefahrzeugs gelangt. Ferner soll zuverlässig verhindert werden, dass aufgewirbeltes Erntegut das Sichtfeld eines Fahrers des Erntefahrzeugs beeinträchtigt.

Hiervon ausgehend liegt der vorliegenden Erfindung die Aufgabe zugrunde, ein neuartiges Vorsatzgerät eines landwirtschaftlichen Erntefahrzeugs zu schaffen.

Diese Aufgabe wird durch ein Vorsatzgerät nach Anspruch 1 gelöst.

Das erfindungsgemäße Vorsatzgerät weist einen Rahmen auf. Das erfindungsgemäße Vorsatzgerät weist ferner eine Erntegutaufnahmeeinrichtung auf, die eingerichtet ist, Erntegut von einem Untergrund aufzunehmen. Das erfindungsgemäße Vorsatzgerät weist ferner eine Erntegutfördereinrichtung auf, die eingerichtet ist, aufgenommenes Erntegut in Richtung auf ein Einzugswerk des Erntefahrzeugs zu fördern. Das erfindungsgemäße Vorsatzgerät weist ferner einen Erntegutniederhalter auf, der an einer gegenüber dem Rahmen verlagerbaren Aufnahme gelagert ist. Das erfindungsgemäße Vorsatzgerät weist ferner eine Schutzvorrichtung auf, die mindestens zwei Abschnitte aufweist und die sich oberhalb der Erntegutaufnahmeeinrichtung und oberhalb der Erntegutfördereinrichtung erstreckt, wobei ein erster Abschnitt der Schutzvorrichtung und ein zweiter Abschnitt der Schutzvorrichtung gelenkig miteinander verbunden sind, derart, dass bei einer Verlagerung des Erntegutniederhalters und der Aufnahme desselben relativ zum Rahmen der erste Abschnitt der Schutzvorrichtung und der zweite Abschnitt der Schutzvorrichtung relativ zueinander verlagerbar sind.

Die Schutzvorrichtung des erfindungsgemäßen Vorsatzgeräts verfügt über mindestens zwei Abschnitte, die gelenkig aneinander angreifen. Bei einer Verlagerung des Erntegutniederhalters und damit der Aufnahme desselben relativ zum Rahmen und damit relativ zur Erntegutfördereinrichtung sowie zur Erntegutaufnahmeeinrichtung sind die Abschnitte der Schutzvorrichtung relativ zueinander verlagerbar. Hierdurch ist es möglich, dass unabhängig von der Relativposition des Erntegutniederhalters relativ zu der Erntegutaufnahmeeinrichtung sowie der Erntegutfördereinrichtung ein Bereich oberhalb der Erntegutfördereinrichtung und der Erntegutaufnahmeeinrichtung zuverlässig abgedeckt ist. Es besteht keine Gefahr, dass aufgewirbeltes Erntegut in den Bereich von Kühleinlässen und Lüftereinlässen des Erntefahrzeugs gelangt oder das Sichtfeld des Fahrers beeinträchtigt. Die Schutzvorrichtung passt sich automatisch, ohne das Erfordernis einer manuellen Einstellung, an die Position des Niederhalters an.

Vorzugsweise greift der erste Abschnitt der Schutzvorrichtung gelenkig an der Aufnahme des Erntegutniederhalters und der zweite Abschnitt der Schutzvorrichtung greift gelenkig an dem ersten Abschnitt derselben an. Dies ist besonders bevorzugt, um einfach sicherzustellen, dass bei einer Veränderung der Position des Erntegutniederhalters bzw. der Aufnahme desselben eine automatische Anpassung der Schutzvorrichtung gewährleistet wird.

Vorzugsweise greift der zweite Abschnitt der Schutzvorrichtung gelenkig an dem Rahmen an. In diesem Fall verfügt die Schutzvorrichtung über zwei Abschnitte. Diese Ausführung ist konstruktiv besonders einfach.

Vorzugsweise weisen die Abschnitte der Schutzvorrichtung jeweils seitliche Bügel auf, wobei seitliche Bügel des ersten Abschnitts der Schutzvorrichtung über erste Gelenke, welche eine erste Schwenkachse definieren oder durch welche sich die erste Schwenkachse erstreckt, gelenkig an der Aufnahme des Erntegutniederhalters angreifen, und wobei die seitlichen Bügel des ersten Abschnitts der Schutzvorrichtung über zweite Gelenke, welche die zweite Schwenkachse definieren oder durch welche sich die zweite Schwenkachse erstreckt, an seitlichen Bügeln des zweiten Abschnitts der Schutzvorrichtung angreifen. Auch diese Merkmale erlauben eine konstruktiv einfache Ausführung des Vorsatzgeräts, nämlich der Schutzvorrichtung desselben, um die automatische Anpassung der Schutzvorrichtung an die Position des Erntegutniederhalters zu gewährleisten.

Vorzugsweise verlaufen zwischen den seitlichen Bügeln der Abschnitte der Schutzvorrichtung sich in Querrichtung des Vorsatzgeräts erstreckende Streben, wobei auf den Streben für alle Abschnitte der Schutzvorrichtung eine gemeinsame Abdeckplane, ein Abdecknetz oder eine Kombination aus Plane und Netz angeordnet ist. Hiermit kann ein Bereich oberhalb der Erntegutaufnahmeeinrichtung und der Erntegutfördereinrichtung vollständig mit einfachen Mitteln abgedeckt werden. Ein Aufnahmebereich und Förderbereich des Vorsatzgeräts können so einfach vollständig nach oben hin geschlossen werden. Es kann besonders einfach verhindert werden, dass aufgewirbeltes Erntegut das Sichtfeld des Fahrers beeinträchtigt und in Kühleinlässe und Lufteinlässe gelangt und dieselben zusetzt.

Eine erfindungsgemäße Schutzvorrichtung verhindert besonders vorteilhaft Erntegutverluste und schützt vorteilhaft vor Fremdkörpern, wie z. B. Steinschlag o. ä.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1: eine Seitenansicht eines erfindungsgemäßen Vorsatzgeräts eines landwirtschaftlichen Erntefahrzeugs zusammen mit einer Schutzeinrichtung in einem ersten Zustand des Vorsatzgeräts;
- Fig. 2: die Seitenansicht der Fig. 1 in einem zweiten Zustand des Vorsatzgeräts;
- Fig. 3: eine perspektivische Ansicht des erfindungsgemäßen Vorsatzgeräts im Zustand der Fig. 1; und
- Fig. 4: die Ansicht der Fig. 3 ohne Abdeckplane, ohne Erntegutaufnahmeeinrichtung und ohne Erntegutfördereinrichtung.

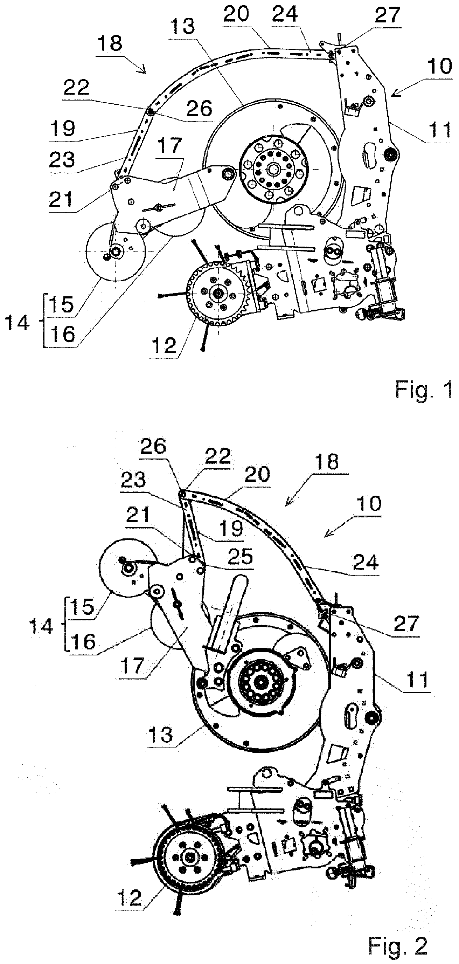

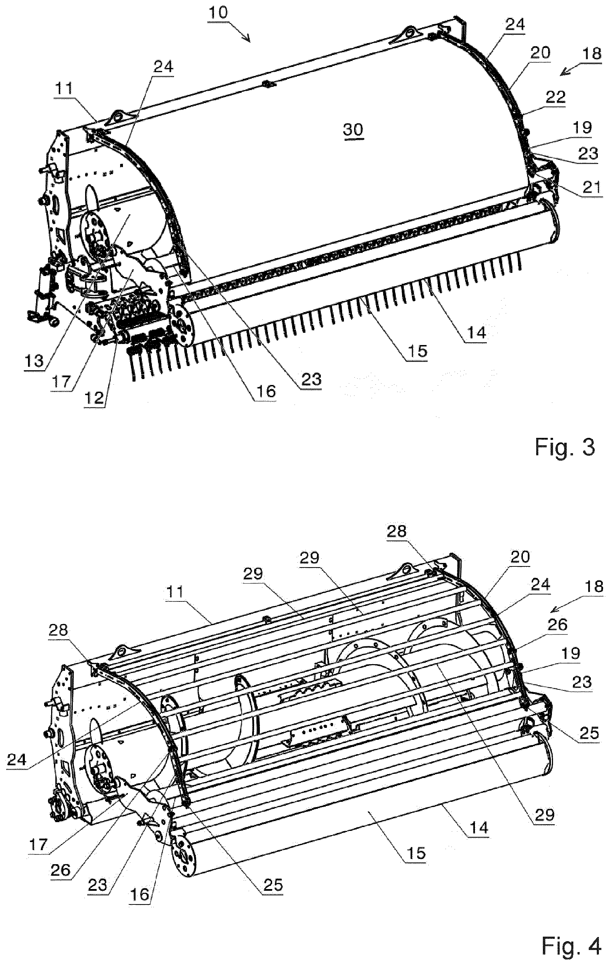

Fig. 1 und 2 zeigen jeweils Seitenansichten eines Vorsatzgeräts eines landwirtschaftlichen Erntefahrzeugs in unterschiedlichen Zuständen des Vorsatzgeräts. Fig. 3 und 4 zeigen perspektivische Ansichten des Vorsatzgeräts, wobei in Fig. 4 einige Baugruppen des Vorsatzgeräts nicht gezeigt sind.

Das Vorsatzgerät 10 verfügt über einen Rahmen 11, wobei über den Rahmen 11 das Vorsatzgerät 10 an das landwirtschaftliche Erntefahrzeug, ein sogenanntes Trägerfahrzeug, angebunden und damit angekoppelt werden kann.

Das Vorsatzgerät 10 verfügt über eine an dem Rahmen 11 drehbar gelagerte Erntegutaufnahmeeinrichtung 12, die eingerichtet ist, Erntegut von einem Untergrund aufzunehmen. Dabei nimmt die Erntegutaufnahmeeinrichtung 12 von einem Untergrund geschnittenes Erntegut auf, welches auf dem Untergrund in Form eines sogenannten Schwads gesammelt bzw. zusammengelegt ist.

Das Vorsatzgerät 10 verfügt weiterhin über einen ebenfalls am Rahmen drehbar gelagerte Erntegutfördereinrichtung 13. Die Erntegutfördereinrichtung 13 ist relativ zur Erntegutaufnahmeeinrichtung 12 verlagerbar und damit an einem anderen Abschnitt des Rahmens 11 als die Erntegutaufnahmeeinrichtung 12 gelagert.

Die Erntegutfördereinrichtung 13 ist eingerichtet, von der Erntegutaufnahmeeinrichtung 12 vom Untergrund aufgenommenes Erntegut in Richtung auf ein Einzugswerk des Erntefahrzeugs zu fördern, und zwar in Querrichtung des Vorsatzgeräts und damit senkrecht zu einer Fortbewegungsrichtung des Erntefahrzeugs. Bei der Erntegutfördereinrichtung 13 handelt es sich vorzugsweise um eine Förderschnecke.

Das Vorsatzgerät 10 verfügt weiterhin über einen Erntegutniederhalter 14, der im gezeigten Ausführungsbeispiel von zwei Rollen 15, 16 gebildet ist. Die Rollen 15, 16 und damit der Erntegutniederhalter 14 ist an einer Aufnahme 17 gelagert, die relativ zum Rahmen 11 verlagerbar ist. Die Aufnahme 17 für die Rollen 15, 16 des Erntegutniederhalters 14 ist gegenüber den Abschnitten des Rahmens 11 verlagerbar, an welchen die Erntegutaufnahmeeinrichtung 12 und die Erntegutfördereinrichtung 13 gelagert sind. Im Betrieb liegt der Erntegutniederhalter 14 mit seinen Rollen 15, 16 auf dem Schwad des geschnittenen und auf dem Untergrund gesammelten Ernteguts auf.

Fig. 1 zeigt den Erntegutniederhalter 14 in einer in Richtung auf den Untergrund abgesenkten Stellung. Fig. 2 zeigt den Erntegutniederhalter 14 in einer ausgehobenen Stellung.

Dadurch, dass die Aufnahme 17 und damit der Erntegutniederhalter 14 relativ zum Rahmen 11 sowie relativ zur Erntegutaufnahmeeinrichtung 12 und zur Erntegutfördereinrichtung 13 verlagerbar ist, kann sich der Erntegutniederhalter 14 im Betrieb automatisch an den Schwad anpassen, wobei dann die Rollen 15, 16 des Erntegutniederhalter 14 sowie die Aufnahme 17 automatisch relativ zum Rahmen 11 sowie der Erntegutaufnahmeeinrichtung 12 sowie der Erntegutfördereinrichtung 13 verlagert werden.

Das Vorsatzgerät 10 verfügt weiterhin über eine Schutzvorrichtung 18, die sich oberhalb der Erntegutaufnahmeeinrichtung 12 und der Erntegutfördereinrichtung 13 erstreckt und verhindert, dass im Betrieb aufgewirbeltes Erntegut unkontrolliert umherfliegt und das Sichtfeld eines Fahrers des Erntefahrzeugs beeinträchtigt oder in Kühleinlässe oder Lüftereinlässe des Erntefahrzeugs gelangt.

Die Schutzvorrichtung 18 verfügt über mindestens zwei Abschnitte 19, 20, die gelenkig miteinander verbunden sind, und zwar derart, dass bei einer Verlagerung des Erntegutniederhalters 14 und der Aufnahme 17 desselben relativ zum Rahmen 11 und relativ zur Erntegutaufnahmeeinrichtung 12 und Erntegutfördereinrichtung 13 ein erster Abschnitt 19 der Schutzvorrichtung 18 relativ zu einem zweiten Abschnitt 20 der Schutzvorrichtung 18 verlagerbar ist, und zwar automatisch. Ändert sich also infolge einer Veränderung eines Schwads aus geschnittenem Erntegut die Relativposition des Niederhalters 14 zum Rahmen 11 und relativ zur Erntegutaufnahmeeinrichtung 12 und Erntegutfördereinrichtung 13, so sind die Abschnitte 19, 20 der Schutzvorrichtung 18 automatisch relativ zueinander verlagerbar, sodass sich die Schutzvorrichtung 18 automatisch an die Position des Niederhalters 14 anpasst.

Der erste Abschnitt 19 der Schutzvorrichtung 18 ist um eine erste Schwenkachse 21 an der Aufnahme 17 des Erntegutniederhalter 14 gelenkig angebunden. Der zweite Abschnitt 20 der Schutzvorrichtung 18 ist um eine zweite Schwenkachse 22 gelenkig an dem ersten Abschnitt 19 der Schutzvorrichtung 18 angebunden. Führt die Aufnahme 17 des Erntegutniederhalters 14 eine Bewegung aus, so verändert sich automatisch die Relativposition der beiden Abschnitte 19 und 20 der Schutzvorrichtung 18 zueinander.

Im gezeigten Ausführungsbeispiel verfügt der erste Abschnitt 19 der Schutzvorrichtung 18 über seitliche Bügel 23, der zweite Abschnitt 20 verfügt über seitliche Bügel 24.

Die seitlichen Bügel 23 des ersten Abschnitts 19 der Schutzvorrichtung 18 sind an Enden derselben über erste Gelenke 25, welche die erste Schwenkachse 21 definieren bzw. durch welche sich die erste Schwenkachse 21 erstreckt, gelenkig mit der Aufnahme 17 des Erntegutniederhalters 14 verbunden.

Die seitlichen Bügel 23 des ersten Abschnitts 19 der Schutzvorrichtung 18 sind ferner an gegenüberliegenden Enden derselben über zweite Gelenke 26, welche die zweite Schwenkachse 22 definieren bzw. durch welche sich die zweite Schwenkachse 22 erstreckt, mit den seitlichen Bügeln 24 des zweiten Abschnitts 20 der Schutzvorrichtung 18 verbunden.

Im gezeigten Ausführungsbeispiel verfügt die Schutzvorrichtung 18 über ausschließlich die beiden Abschnitte 19, 20, wobei dann der zweite Abschnitt 20 der Schutzvorrichtung 18 um eine dritte Schwenkachse 27 gelenkig an dem Rahmen 11 des Vorsatzgeräts 10 angreift. In diesem Fall greifen dann die seitlichen Bügel 24 des zweiten Abschnitts 20 der Schutzvorrichtung 18 über dritte Gelenke 28, welche die dritte Schwenkachse 27 definieren oder durch welche sich die dritte Schwenkachse 27 erstreckt, gelenkig an dem Rahmen 11 des Vorsatzgeräts 10 an.

Es ist auch möglich, dass die Schutzvorrichtung 18 des Vorsatzgeräts 10 zusätzlich zu den beiden Abschnitten 19, 20 einen dritten Abschnitt (nicht gezeigt) aufweist, wobei in diesem Fall dann der zweite Abschnitt 20 nicht gelenkig an dem Rahmen 11, sondern gelenkig an dem dritten Abschnitt (nicht gezeigt) um eine dritte Schwenkachse (nicht gezeigt) angreift, und wobei dann der dritte Abschnitt (nicht gezeigt) der Schutzvorrichtung vorzugsweise starr am Rahmen 11 befestigt ist. In diesem Fall greifen demnach die seitlichen Bügel 24 des zweiten Abschnitts 20 über die dritten Gelenke an Bügeln des dritten Abschnitts (nicht gezeigt) an, die ihrerseits fest mit dem Rahmen 11 verbunden sind.

Wie am besten Fig. 3 und 4 entnommen werden kann, ist die Breite der Schutzvorrichtung 18 in Querrichtung des Vorsatzgeräts an die Breite des Erntegutniederhalters 14 angepasst. Die Schutzvorrichtung 18 erstreckt sich demnach, in Querrichtung des Vorsatzgeräts 10 gesehen, nahezu über die gesamte axiale Länge der Erntegutaufnahmeeinrichtung 12 sowie der Erntegutfördereinrichtung 13. Lediglich seitliche Endstücke der Erntegutaufnahmeeinrichtung 12 und der Erntegutfördereinrichtung 13 stehen seitlich gegenüber den Rändern der Schutzvorrichtung 18 vor.

Die Breite der Schutzvorrichtung 18 erstreckt sich vorzugsweise über die gesamte Breite der Erntegutaufnahmeeinrichtung 12 und der Erntegutfördereinrichtung 13. Bei größeren Arbeitsbreiten des Vorsatzgerätes kann vorgesehen werden, dass sich die Schutzvorrichtung 18 nicht über die gesamte Breite erstreckt, sondern lediglich den Mittenbereich abdeckt.

Gemäß Fig. 4 erstrecken sich zwischen den oben erwähnten Bügeln 23, 24 der Abschnitte 19, 20 der Schutzvorrichtung 18 in Querrichtung des Vorsatzgeräts 10 verlaufende Streben 29. Auf diesen Streben 29 ist eine für alle Abschnitte 19, 20 der Schutzvorrichtung 18 gemeinsame Abdeckplane 30 angeordnet. Diese Abdeckplane 30 kann sich bei der Verlagerung der Relativposition der Abschnitte 19, 20 der Schutzvorrichtung 18 leicht verformen, um in allen Relativpositionen über die Schutzvorrichtung 18 die Erntegutaufnahmeeinrichtung 12 und die Erntegutfördereinrichtung 13 nach oben abzudecken.

Die Abdeckplane 30 kann alternativ als Abdecknetz 30 oder als eine Kombination aus einer Plane und einem Netz ausgeführt werden. Die Transparenz eines Netzes gibt dem Fahrer des Erntefahrzeugs vorteilhaft einen Blick auf die abgedeckten Teile des Vorsatzgeräts sowie das verarbeitete Erntegut frei.

Bei der erfindungsgemäßen Schutzvorrichtung 18 ist im gezeigten Ausführungsbeispiel eine Knickstelle integriert. Diese Knickstelle ist im Bereich der Schwenkachse 22 zwischen den beiden Abschnitten 19, 20 der Schutzvorrichtung 18 ausgebildet. Es können auch mehrere derartige Knickstellen vorhanden sein, und zwar dann, wenn die Schutzvorrichtung 18 mehr als zwei Abschnitte 19, 20 aufweist. Die Abschnitte 19, 20 der Schutzvorrichtung 18 sind derart zueinander verlagerbar, dass der volle Funktionsumfang des Vorsatzgeräts 10 erhalten bleibt. So ist gemäß Fig. 2 auch ein vollständiges Ausheben der Erntegutfördereinrichtung 13 sowie des Erntegutniederhalters 14 möglich.

Die Schutzvorrichtung 18 stellt einen nach oben hin geschlossenen Einzugsbereich des Vorsatzgeräts 10 bereit. Relativbewegungen des Erntegutniederhalters 14 können automatisch ausgeglichen werden. Es kann zuverlässig verhindert werden, dass aufgewirbeltes Erntegut den Sichtbereich eines Fahrers beeinträchtigt und in den Bereich von Kühleinlässen und Lüftereinlässen des Erntefahrzeugs gelangt.

### Bezugszeichenliste

- 10: Vorsatzgerät
- 11: Rahmen
- 12: Erntegutaufnahmeeinrichtung
- 13: Erntegutfördereinrichtung
- 14: Erntegutniederhalter
- 15: Rolle
- 16: Rolle
- 17: Aufnahme
- 18: Schutzvorrichtung
- 19: Abschnitt
- 20: Abschnitt
- 21: Schwenkachse
- 22: Schwenkachse
- 23: Bügel
- 24: Bügel
- 25: Gelenk
- 26: Gelenk
- 27: Schwenkachse
- 28: Gelenk
- 29: Strebe
- 30: Abdeckplane, Abdecknetz oder Kombination Netz/Plane

## Patentansprüche

1. Vorsatzgerät (10) eines landwirtschaftlichen Erntefahrzeugs,
mit einem Rahmen (11),
mit einer Erntegutaufnahmeeinrichtung (12), die eingerichtet ist, Erntegut von einem Untergrund aufzunehmen,
mit einer Erntegutfördereinrichtung (13), die eingerichtet ist, aufgenommenes Erntegut in Richtung auf ein Einzugswerk des Erntefahrzeugs zu fördern,
mit einem Erntegutniederhalter (14), der an einer gegenüber dem Rahmen (11) verlagerbaren Aufnahme (17) gelagert ist,
mit einer Schutzvorrichtung (18), die mindestens zwei Abschnitte (19, 20) aufweist und die sich oberhalb der Erntegutaufnahmeeinrichtung (12) und oberhalb der Erntegutfördereinrichtung (13) erstreckt,
wobei ein erster Abschnitt (19) der Schutzvorrichtung (18) und ein zweiter Abschnitt (20) der Schutzvorrichtung (18) gelenkig miteinander verbunden sind, derart, dass bei einer Verlagerung des Erntegutniederhalters (14) und der Aufnahme (17) desselben relativ zum Rahmen (11) der erste Abschnitt (19) der Schutzvorrichtung (18) und der zweite Abschnitt (20) der Schutzvorrichtung (19) relativ zueinander verlagerbar sind.

2. Vorsatzgerät nach Anspruch 1, **dadurch gekennzeichnet, dass** der erste Abschnitt (19) der Schutzvorrichtung (18) gelenkig an der Aufnahme (17) des Erntegutniederhalters (14) und der zweite Abschnitt (19) der Schutzvorrichtung (18) gelenkig an dem ersten Abschnitt (19) derselben angreift.

3. Vorsatzgerät nach Anspruch 2, **dadurch gekennzeichnet, dass** der zweite Abschnitt (20) der Schutzvorrichtung (18) gelenkig an dem Rahmen (11) angreift.

4. Vorsatzgerät nach Anspruch 2, **dadurch gekennzeichnet, dass** der zweite Abschnitt der Schutzvorrichtung gelenkig an einem dritten Abschnitt der Schutzvorrichtung angreift, wobei der dritte Abschnitt der Schutzvorrichtung an dem Rahmen starr befestigt ist.

5. Vorsatzgerät nach einem der Ansprüche 1 bis 4, **dadurch gekennzeichnet, dass** die Schutzvorrichtung (18) in Querrichtung des Vorsatzgeräts eine Breite aufweist, die an die Breite des Erntegutniederhalters (14) angepasst ist.

6. Vorsatzgerät nach einem der Ansprüche 1 bis 5, **dadurch gekennzeichnet, dass** die Abschnitte (19, 20) der Schutzvorrichtung (18) jeweils seitliche Bügel (23, 24) aufweisen.

7. Vorsatzgerät nach Anspruch 6, **dadurch gekennzeichnet, dass** seitliche Bügel (23) des ersten Abschnitts (19) der Schutzvorrichtung (20) über erste Gelenke (25), welche eine erste Schwenkachse (21) definieren oder durch welche sich die erste Schwenkachse (21) erstreckt, gelenkig an der Aufnahme (17) des Erntegutniederhalters (14) angreifen, und dass die seitlichen Bügel (23) des ersten Abschnitts ( 24) der Schutzvorrichtung (18) über zweite Gelenke (26), welche eine zweite Schwenkachse (22) definieren oder durch welche sich die zweite Schwenkachse (22) erstreckt, an seitlichen Bügeln (24) des zweiten Abschnitts (20) der Schutzvorrichtung angreifen.

8. Vorsatzgerät nach Anspruch 3 und 7, **dadurch gekennzeichnet, dass** die seitlichen Bügel (24) des zweiten Abschnitts (20) der Schutzvorrichtung (18) über dritte Gelenke (28), welche eine dritte Schwenkachse (27) definieren oder durch welche sich die dritte Schwenkachse (27) erstreckt, gelenkig an dem Rahmen (11) des Vorsatzgeräts angreifen.

9. Vorsatzgerät nach Anspruch 4 und 7, **dadurch gekennzeichnet, dass** die seitlichen Bügel des zweiten Abschnitts der Schutzvorrichtung über dritte Gelenke, welche eine dritte Schwenkachse definieren oder durch welche sich die dritte Schwenkachse erstreckt, gelenkig an seitlichen Bügeln des dritten Abschnitts der Schutzvorrichtung angreifen.

10. Vorsatzgerät nach einem der Ansprüche 6 bis 9, **dadurch gekennzeichnet, dass** zwischen den seitlichen Bügeln (23, 24) der Abschnitte (19, 20) der Schutzvorrichtung (18) sich in Querrichtung des Vorsatzgeräts erstreckende Streben (29) verlaufen, wobei auf den Streben (29) für alle Abschnitte der Schutzvorrichtung eine gemeinsame Abdeckplane (30) oder ein Abdecknetz (30) oder eine Kombination aus einer Abdeckplane und einem Abdecknetz (30) angeordnet ist.

11. Vorsatzgerät nach einem der Ansprüche 1 bis 10, **dadurch gekennzeichnet, dass** das Vorsatzgerät über den Rahmen (11) an das landwirtschaftliche Erntefahrzeug koppelbar ist.
